# EUROPEAN PATENT SPECIFICATION

(11) **EP 1 656 978 B1**
(45) Date of publication and mention of the grant of the patent: **18.09.2013**
(21) Application number: 05024530.7
(22) Date of filing: 16.10.1998
(51) Int. Cl.: B01D 19/00, F04D 9/00, F04D 29/42, F24H 9/14

(54) **Pump breather unit, particularly for wall-mounted boilers**
Pumpenentlüftungsvorrichtung, insbesondere für Wandheizkessel
Unité de degazage d'une pompe, notamment pour chaudière murale

(30) Priority: 20.10.1997 IT VR970095
(43) Date of publication of application: 17.05.2006
(62) Divisional of application: 98119625.6
(73) Proprietor: FARO S.r.l., 37068 Vigasio VR (IT)
(72) Inventor: Valter Falavegna, 37068 Vigasio Verona (IT); Avito Falavegna, 37068 Vigasio Verona (IT); Michele Rossignoli, 37138 Verona (IT)
(74) Representative: Reniero, Cirillo Silvano

(56) References cited:
- EP-A- 0 797 057
- BE-A- 518 822
- DE-A1- 1 653 725
- DE-A1- 3 109 918
- DE-B- 1 048 179
- FR-A- 2 405 083
- GB-A- 2 092 226

## Description

The present invention relates to a pump breather unit with built-in hydraulic distribution system, particularly suitable for wall-mounted boilers for heating and producing hot water.

The design of wall-mounted instant boilers must meet the requirement of minimizing the overall dimensions at increasingly competitive costs.

FR-A-2 405 083 discloses a pump-breather unit according to the preamble of claim 1 and relates to a device designed to extract air from a liquid before pumping it by means of a centrifugal pump, comprising a separation chamber in fluid communication with a pump body and a duct which connects pump scroll with the separation chamber in order to extract air from the scroll. Separation between air and liquid is carried out before the liquid is pumped, i.e. while the impeller of the pump is standstill, due to natural and not controlled rising of the air bubble toward the vent valve. Separation process is, thus, slow and not much efficient.

GB-A-2 092 226 discloses a centrifugal pump for moving gaseous liquid in which the separation of the gas from the liquid is carried out by means of a gas separator. The gas separator is mounted in the suction chamber of the pump and operates according to the centrifugal principle. A drawback of this gas separator is that it can be displaced by centrifugal force, so generating noise.

BE 518 822 A discloses a pump provided with an air separator. The air separator includes a band of knitted metal wire. The metal band is folded and rolled upon itself thereby forming a coil delimiting a great number of tortuous ducts through which liquid is forced to flow. A drawback of such a coil is that fluid flowing therethrough is subjected to great load losses, and thus a pump with a much greater head and actuated by a much more powerful motor must be used, which would be unfeasible at least when such a pump is to be installed in wall-boiler,

DE 16 53 725 A1 and DE 31 09 918 A1 disclose separator devices made of a number of components (pump casing, a bubble separator, etc.) to be assembled with one another. Moreover, the grill provided in DE 16 53 725 A1 is cylindrical in shape and thus the liquid flowing through the separator is exposed to a very limited grill surface with consequent limited bubble separation efficiency.

The aim of the present invention is to provide a high-efficiency degasser-air separator included in the body or casing of a pump particularly for use in systems for heating and distributing sanitary water.

This aim and other objects which will become apparent hereinafter are achieved by a pump-breather unit according to claim 1.

Further characteristics and advantages of the present invention will become apparent from the detailed description of some currently preferred embodiments thereof, given with reference to the accompanying drawings, wherein:
Figure 1 is a front view of the scroll of the pump breather unit, with parts taken away;
Figure 2 is a sectional view taken along the plane A-A of Figure 1;
Figure 3 is a plan view of the air vent valve of Figure 2;
Figure 4 is a front view, similar to Figure 1 but related to another embodiment of a pump scroll;
Figure 5 is a top view, with parts shown in cross-section, of the pump scroll of Figure 4;

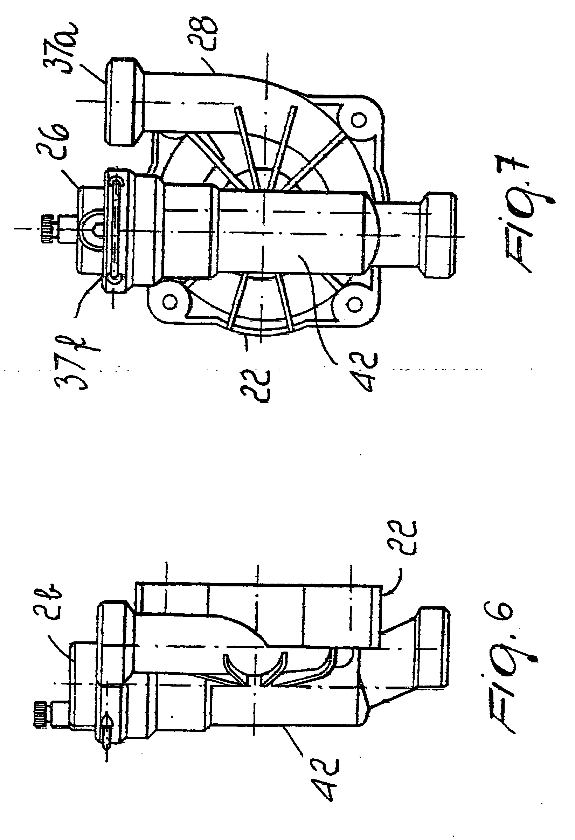

Figures 6 and 7 are, respectively, a side view and a rear view of the pump scroll of Figure 5; and
Figure 8 is a chart.

In the accompanying drawings, identical or similar parts or components are designated by the same reference numerals.

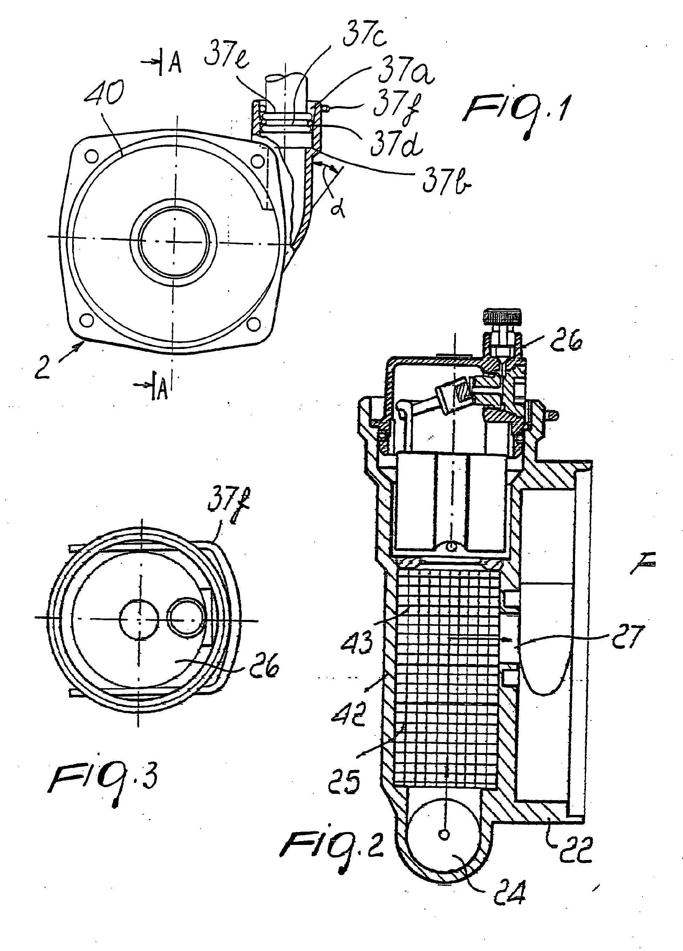

A pump breather unit generally indicated at 2 comprises a pump 22 and an air separator 25 (Figure 2) having a water inlet 24 and an outlet opening 27.

At the top of the separator 25 there is provided an air vent valve 26 (Figures 2 and 3) which is meant to vent externally any bubbles or pockets of air that are present in the water flowing through the separator 25 under the effect of the suction applied by the pump22. The water from inlet 24 passes through the opening 27 and is discharged along a delivery duct 28.

The inlet 24 is arranged to receive a stream, e.g. from a radiator system, which is subjected to venting before being drawn into the pump 22.

As illustrated by way of example in Figure 1, delivery duct 28 is provided with a quick coupling comprising a seat 37a in the female part thereof, which has a shoulder 37b for the abutment of a male part. The male part has an annular slot 37c for accommodating a sealing gasket 37d. The slot 37c is preferably obtained by providing a corrugation in the male part, so as to delimit a rear shoulder 37e in the male part against which a clip or retainer 37f can abut; said clip can be inserted in (and extracted from, when necessary) a suitable hole provided in the female part.

In order to allow the impeller of the pump to rotate so as to perform an effective pumping action but maintain flow-rate and head at values which ensure optimum performance and with substantially silent operation, the scroll must have a small and gradual widening so as to guide the centrifuged water to the delivery duct 28 without producing cavitation or gurgling, which in addition to reducing the performance of the pump cause noise. This result has been achieved by providing a spiral curve inside the scroll with an angle of tangency α between 5 and 30 degrees of the delivery duct.

In order to separate the air bubbles in a water circulation circuit, it is customary to convey the flow into a separator container whose transverse cross-section is approximately ten times that of the feed duct, so that as a consequence of the reduction in the speed of the stream the bubbles have sufficient time to rise toward the upper part of the separator, where an air vent valve 26 is provided, while the water flows out from the opposite side with respect to the inlet side.

According to the present invention, a cylindrical separator container 42 (Figure 2) is provided which is formed monolithically with the scroll 22 of the pump and which includes, directly below the air vent valve 26, an M-shaped grille 43 which acts as a trap for retaining the air bubbles, which are caught between the meshes of the grille and can then rise along the grille until they reach the vent valve 26 for external venting.

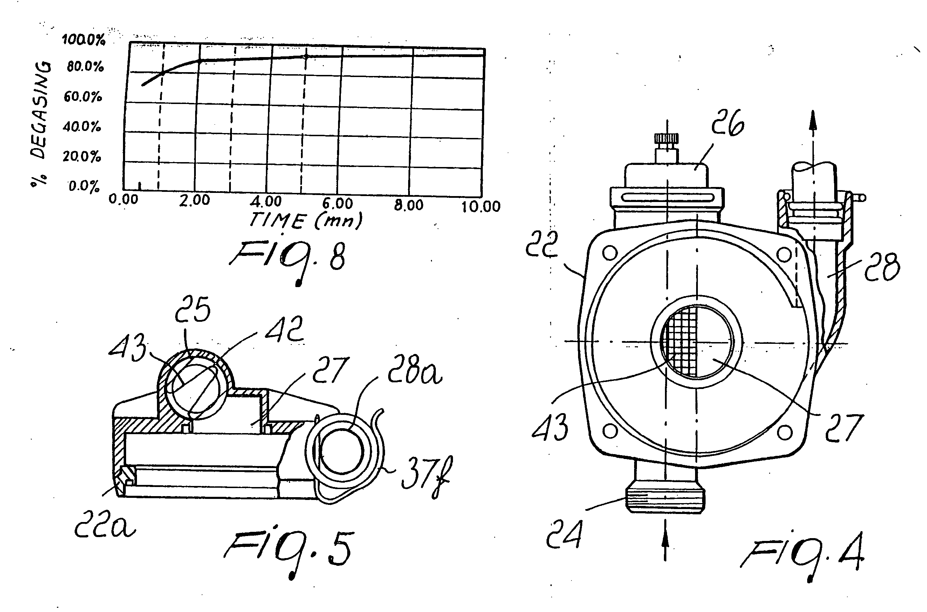

Advantageously, the degassing unit formed by the scroll 22 and the separator 42 can be provided with a ring 22a (Figure 5) for coupling to the pump motor and for delimiting its geometric shape.

The stream that arrives from the feed duct 24, before being affected by the suction of the impeller of the pump through the opening 27, must flow along the intake duct 25 in which the M-shaped grille 43 is accommodated. The grille 43 acts as a trap for retaining the air bubbles, which by being caught between the meshes of the grille form clusters, generating larger and larger bubbles which gradually rise toward the vent valve 26, from which the air is vented externally.

Depending on the type of plant that the pump must serve, the grille 43 can assume a different shape, for example an N-like or zigzag or sinusoidal one, and have different shapes and dimensions for the meshes, which can be quadrangular, rhomboidal or circular in a horizontal or vertical direction and can have a spacing of 2 to 7 mm in a longitudinal direction.

A specific configuration of the grille 43 is chosen as a function of the expected intensity of the stream and of the operating pressures of the systems, since these variables determine the number and diameter of the bubbles to be vented.

A degassing unit structured as described above, besides allowing a drastic bulk reduction, ensures that the bubbles trapped in the water, instead of being simply slowed inside it in order to have the time to rise toward the vent valve 26, are retained and separated from the stream and are allowed to rise, caught in the grille 43, which is appropriately shaped and facilitates the clustering of several bubbles.

Tests have been conducted by injecting 400 cm³ of air into a system with air bubble-free water circulation at the pressure of one bar; the amounts of degassed air, i.e. of air discharged from the valve 26, were noted at regular time intervals. The results are shown in the following Table 1, which clearly shows that after 1 minute approximately 80% of the air had been vented.

**Table 1**

| PLANT FLOW RATE: 1000 l/h | | | | |
|---|---|---|---|---|
| TEST | Time | 30" | 1' | 2' |
| 1 | cm³ of degassed air | 280 | 320 | 345 |
| | Percentage | 70 | 80 | 86,2 |
| TEST | Time | 30" | 1' | 2' |
| 2 | cm³ of degassed air | 240 | 315 | 345 |
| | Percentage | 60 | 78,7 | 86,2 |
| AVERAGE PERCENTAGE | | 65 | 79,3 | 86,2 |

The results of Table 1 are plotted in the chart of Figure 8.

A WILO RS 20-65 (maximum speed 2400 rpm) was used for the tests, while a commercially available CALEFFI Robocal valve was used as a vent valve.

The above-described experimental results are very good and difficult to achieve with conventional systems, since the injected air concentrates mostly in one region of the system, so that the pump starts to cavitate and very often is unable to initiate or maintain water circulation.

The above-described invention is susceptible of numerous modifications and variations within the protective scope defined by the appended claims.

## Claims

1. A pump-breather unit (2) including a pump body (22) having a scroll or casing and a separator container (42) which includes a lower intake port (24) and an outlet port (27) not aligned with said intake port (24) and connected to pump intake, and a vent valve (26) at the top thereof, said separator container (42) being formed monolithically with said scroll or casing (22) and being **characterized in that** said separator container includes, directly below said vent valve (26), a multi-layer grille (43) designed to act as a trap for air bubbles that are present in the water fed into said separator container (42), which can then rise along said grille (43) until reaching said vent valve (26).

2. A unit acoording to claim 1, **characterized in that** said grille (43) has a polygonal or round meshes having size ranging from 2 to 7 mm.

3. A unit according to claim 1 or 2, **characterized in that** said grille (43) has a substantially M-shaped, N-shaped, zigzagged configuration.

4. A unit according to any claim 1 to 3, **characterized in that** said pump scroll (22) comprises a coupling ring (22a) to a pump motor,

5. A unit according to any claim 1 to 4, **characterized in that** said pump scroll (22) has a gradually widening delivery duct (28).

6. A unit according claim 5, **characterized in that** a spiral curve is provided inside said pump scroll (22) with an angle of tangency α between 5 and 30 degrees of said delivery duct (28),

7. A unit according to claim 5 or 6, **characterized in that** said delivery duct (28) includes a quick coupling comprising a seat (37a) in the female part thereof, which has a shoulder (37b) for the abutment of a male part, an annular slot (37c) in the male part thereof for accommodating a sealing gasket (37d).

8. A unit according to claim 7, **characterized in that** said annular slot (37c) is obtained by providing a corrugation in the male part, so as to delimit a rear shoulder (37e) in the male part against which a clip or retainer (37f) can abut; said clip or retainer being insertable in, and extractable from, a hole provided in the female part.

## Patentansprüche

1. Eine Pumpenentlüftungseinheit (2), aufweisend einen Pumpenkörper (22) mit einer Rolle oder einem Gehäuse und einem Separatorbehälter (42), welcher einen unteren Einlassanschluss (24) und einen Auslassanschluss (27) aufweist, welcher nicht mit dem Einlassanschluss (24) ausgerichtet und mit einem Pumpeneinlass verbunden ist, und ein Belüftungsventil (26) an der Oberseite davon, wobei der Separatorbehälter (42) einstückig mit der Rolle oder dem Gehäuse (22) ausgebildet ist, und wobei die Pumpenentlüftungseinheit **dadurch gekennzeichnet ist, dass** der Separatorbehälter direkt unter dem Belüftungsventil (26) ein mehrschichtiges Gitter (43) aufweist, welches gestaltet ist, um als eine Falle für Luftblasen zu wirken, die in dem Wasser vorhanden sind, welches in den Separatorbehälter (42) geleitet wird, und welche dann entlang des Gitters (43) aufsteigen können, bis sie das Belüftungsventil (26) erreichen.

2. Einheit nach Anspruch 1, **dadurch gekennzeichnet, dass** das Gitter (43) polygonale oder runde Maschen mit einer Größe zwischen 2 und 7 mm aufweist.

3. Einheit nach Anspruch 1 oder 2, **dadurch gekennzeichnet, dass** das Gitter (43) eine im Wesentlichen M-förmige, N-förmige Zickzackkonfiguration aufweist.

4. Einheit nach irgendeinem der Ansprüche 1 bis 3, **dadurch gekennzeichnet, dass** die Pumpenrolle (22) einen Kupplungsring (22a) zu einem Pumpenmotor aufweist.

5. Einheit nach irgendeinem der Ansprüche 1 bis 4, **dadurch gekennzeichnet, dass** die Pumpenrolle (22) eine sich graduell verbreiternde Zufuhrleitung (28) aufweist.

6. Einheit nach Anspruch 5, **dadurch gekennzeichnet, dass** eine Spiralkurve innerhalb der Pumpenrolle (22) mit einem Tangentenwinkel a zwischen 5 und 30 Grad der Zufuhrleitung (28) vorgesehen ist.

7. Einheit nach Anspruch 5 oder 6, **dadurch gekennzeichnet, dass** die Zufuhrleitung (28) eine Schnellkupplung aufweist, die einen Sitz (37a) im weiblichen Teil davon aufweist, welcher eine Schulter (37b) zum Anstoßen eines männlichen Teils aufweist, einen ringförmigen Schlitz (37c) im männlichen Teil davon zum Aufnehmen einer Dichtung (37d) aufweist.

8. Einheit nach Anspruch 7, **dadurch gekennzeichnet, dass** der ringförmige Schlitz (37c) durch Bereitstellen einer Sicke in dem männlichen Teil erhalten wird, um eine hintere Schulter (37e) in dem männlichen Teil zu begrenzen, gegen welche ein Clip oder ein Halter (37f) anstoßen kann, wobei der Clip oder Halter in ein Loch einfügbar und daraus herausnehmbar ist, welches im weiblichen Teil vorgesehen ist.

## Revendications

1. Une unité pompe-purgeur (2) comprenant un corps de pompe (22) avec une volute ou un carter et un récipient de séparateur (42) qui inclut un orifice d'admission inférieur (24) et un orifice de sortie (27) non aligné avec ledit orifice d'admission (24) et relié à l'admission de la pompe, et une soupape d'éventage (26) à son sommet, ledit récipient de séparateur (42) étant formé monolithiquement avec ladite volute ou ledit carter (22) et étant **caractérisé en ce que** ledit récipient de séparateur comprend, directement au-dessous de ladite soupape d'éventage (26), une grille multicouche (43) conçue de manière à jouer un rôle de piège pour les bulles d'air qui sont présentes dans l'eau amenée dans ledit récipient de séparateur (42), qui meuvent alors s'élever le long de ladite grille (43) jusqu'à atteindre ladite soupape d'éventage.

2. Une unité selon la revendication 1, **caractérisée en ce que** ladite grille (43) possède des mailles polygonales ou rondes dont la taille s'étend entre 2 et 7 mm.

3. Une unité selon la revendication 1 ou 2, **caractérisée en ce que** ladite grille (43) présente une configuration substantiellement en forme de M, en forme de N, en zigzag.

4. Une unité selon l'une des revendications 1 à 3, **caractérisée en ce que** ladite volute de pompe (22) comprend une bague de couplage (22a) à un moteur de pompe.

5. Une unité selon l'une des revendications 1 à 4, **caractérisée en ce que** ladite volute de pompe (22) possède un tube de refoulement (28) qui s'élargit progressivement.

6. Une unité selon la revendication 5, **caractérisée en ce qu'**une courbe en spirale est prévue à l'intérieur de ladite volute de pompe (22) avec un angle de tangence α compris entre 5 et 30 degrés par rapport audit tube de refoulement (28).

7. Une unité selon la revendication 5 ou 6, **caractérisée en ce que** ledit tube de refoulement (28) comprend un couplage rapide comprenant un siège (37a) dans sa partie femelle, qui possède un épaulement (37b) pour la venue en butée d'une pièce mâle, une fente annulaire (37c) dans sa pièce mâle pour loger un joint d'étanchéité (37d).

8. Une unité selon la revendication 7, **caractérisée en ce que** ladite fente annulaire (37c) est obtenue en formant une ondulation dans la pièce mâle, de manière à délimiter dans la pièce mâle un épaulement arrière (37e) contre lequel peut venir en butée un clip ou une pièce de retenue (37f), ledit clip ou ladite pièce de retenue pouvant être inséré dans, et extrait hors de, un trou formé dans la pièce femelle.
